# EUROPEAN PATENT SPECIFICATION

(11) **EP 3 238 844 B1**
(45) Date of publication and mention of the grant of the patent: **26.06.2019**
(21) Application number: 15873393.1
(22) Date of filing: 03.02.2015
(51) Int. Cl.: B21B 39/14, B21B 37/74, B21B 45/00

(54) **CONTINUOUS CASTING ROLLING METHOD**
STRANGGIESSWALZVERFAHREN
PROCÉDÉ DE COULÉE CONTINUE LAMINAGE

(30) Priority: 24.12.2014 KR 20140189091
(43) Date of publication of application: 01.11.2017
(73) Proprietor: POSCO, Gyeongsangbuk-do 790-300 (KR)
(72) Inventor: KO, Young-Ju, Gwangyang-si Jeollanam-do 545-711 (KR); SONG, Suk-Cheol, Gwangyang-si Jeollanam-do 545-711 (KR); CHUNG, Jea-Sook, Gwangyang-si Jeollanam-do 545-711 (KR); SHIM, Young-Sup, Gwangyang-si Jeollanam-do 545-711 (KR); KIM, Yong-Ki, Gwangyang-si Jeollanam-do 545-711 (KR); CHO, Yong-Seok, Gwangyang-si Jeollanam-do 545-711 (KR); PARK, Kyeong-Mi, Gwangyang-si Jeollanam-do 545-711 (KR)
(74) Representative: Zech, Stefan Markus
(86) International application number: PCT/KR2015/001080
(87) International publication number: WO 2016/104865

(56) References cited:
- WO-A1-2007/073841
- WO-A1-2008/113848
- WO-A1-2012/080368
- CA-A1- 2 509 044
- DE-A1-102013 213 418
- JP-A- H09 314 215
- JP-A- H09 314 215
- JP-A- H11 169 903
- KR-A- 20140 002 882

## Description

### [Technical Field]

The present disclosure relates to a continuous casting rolling method, and more particularly, to an invention for preventing damage in configurations provided in a layout during continuous casting rolling.

### [Background Art]

Processes of rolling using high temperature cast slabs solidified in continuous casting devices are currently widely used due to relatively low equipment and operating costs, as compared with existing processes. An example for a continuous casting device can be found in DE 10 2013 213418 A1, which document discloses a continuous casting and rolling method according to the preamble of claim 1.

Further, a discontinuous process in which rolling may be carried out separately from the above-mentioned continuous casting, while continuously using continuous casting and rolling, is disclosed in Korean Patent Laid-Open Publication No. 1990-7001437.

For example, the processes may be respectively carried out in a continuous rolling mode in which a continuous casting process and a rolling process are continuously performed and in a discontinuous rolling mode in which the continuous casting process and the rolling process are discontinuously performed.

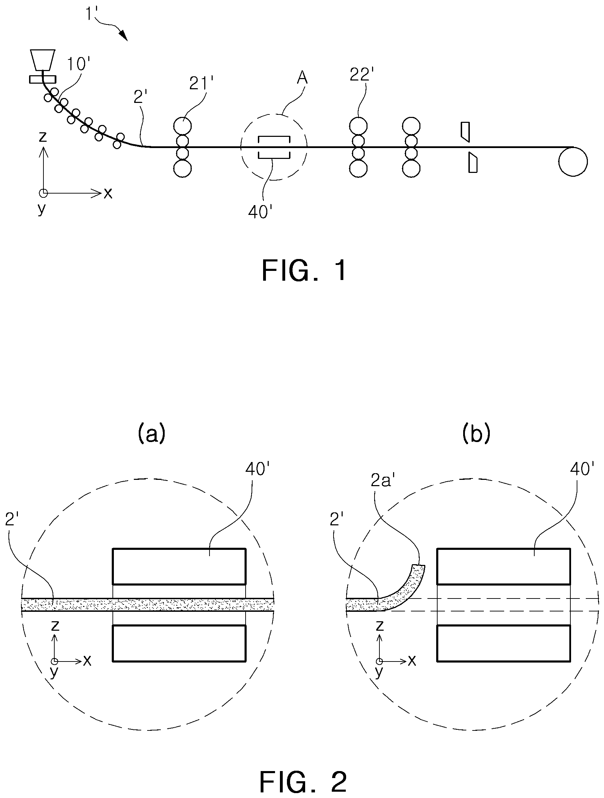

In this case, with reference to FIG. 1 illustrating an apparatus 1' in which continuous casting rolling may be performed, a cast slab 2' having a predetermined thickness is produced in a continuous casting device 10', and the cast slab 2' is primarily rolled in a first rolling unit 21'. In order to perform finish rolling in a second rolling unit 22' , a heater 40' may heat the cast slab 2' to a temperature for rolling, in the second rolling unit 22'. The finish-rolled cast slab 2' is cut by a cutter and wound by a winding machine R to be produced as a product.

On the other hand, in the related art, as illustrated in FIG. 2A, a device such as the heater 40' or the like, heating the cast slab 2' or maintaining temperature of the cast slab 2', is fixedly installed on a movement line on which the cast slab 2' is moved, during continuous operations, and is driven via turning on and turning off thereof to selectively heat or maintain heating thereof, regardless of the type of the continuous rolling mode and the discontinuous rolling mode.

However, as illustrated in FIG. 2B, in an initial stage of the continuous rolling mode or in the discontinuous rolling mode, a vertical warp or horizontal camber may occur in a front end portion of the cast slab 2' while the cast slab is rolled in the first rolling unit 21', and thus, there is present a problem in which such a warp or camber collides with the heater 40' .

The occurrence of warping at the front end portion of the cast slab 2' as described above may also occur at an exit of the continuous casting device 10', depending on temperature conditions and an external environment.

Thus, research into a rolling method, a continuous casting rolling method, and a continuous casting rolling device has been required in order to solve the problems described above.

### [Disclosure]

### [Technical Problem]

An aspect according to an exemplary embodiment in the present invention is to provide a continuous casting rolling method in which damage, in configurations provided in layouts during a continuous casting rolling process may be prevented, and a yield rate may be improved via efficient operating thereof.

### [Technical Solution]

According to an aspect of the present disclosure, a rolling method includes reduction-rolling a cast slab being supplied; and heating the cast slab prior to or during the reduction-rolling, by allowing a heater to enter a travel path of the cast slab on which the cast slab travels, immediately after a point of the cast slab, at which a height of the cast slab is uniformly converged, passes through a position of the heater in a direction of travel of the cast slab, the heater being provided to increase or maintain a temperature of the cast slab.

In the heating, when the height of the cast slab is changed within an interval between an upper coil plate and a lower coil plate of the heater, heating upper and lower surfaces of the cast slab, the height of the cast slab may be determined to be constantly converged.

According to an aspect of the present invention, a continuous casting rolling method includes a continuous casting operation of producing a cast slab; a rolling operation of reduction-rolling the cast slab; and a heating operation performed prior to or during the rolling operation, to heat the cast slab by allowing a heater to enter a travel path of the cast slab, after a front end portion of the cast slab travels, in a continuous rolling mode in which the cast slab is provided as a continuous body in the continuous casting operation and the rolling operation, the heater being provided to increase or maintain a temperature of the cast slab. In the heating operation, immediately after an initial point of the cast slab, at which a height of the cast slab in a direction perpendicular to a direction of travel of the cast slab begins to be constant, passes through a position of the heater in the direction of travel of the cast slab, the heater enters the travel path of the cast slab.

The continuous casting rolling method may further include a cutting operation of performing selective cutting of the cast slab, from cutting before the rolling operation or cutting during the rolling operation, to switch between the continuous rolling mode, and a discontinuous rolling mode in which the cast slab is cut before or during the rolling operation. In this case, the heating operation may be performed in the continuous rolling mode.

When a temperature of the cast slab cut to perform the discontinuous rolling mode in the cutting operation is lower than a temperature of the cast slab heated in the continuous rolling mode, the heating operation may be performed in the discontinuous rolling mode.

The rolling operation may be performed by a rolling mill including a plurality of rolling stands containing upper and lower rolling rolls, and in the heating operation, the heater may enter the travel path of the cast slab, immediately after a front end portion of the cast slab passes through an exit of a forward rolling stand into which the front end portion of the cast slab initially enters, among rolling stands provided behind the heater in the direction of travel of the cast slab.

The rolling operation may include a first rolling operation of primarily reduction-rolling the cast slab after the continuous casting operation, and a second rolling operation of secondarily reduction-pressing the primarily rolled cast slab after the first rolling operation. The heating operation may be performed between the first rolling operation and the second rolling operation.

In the heating operation, the heater may be driven before the heater enters above the travel path of the cast slab, to preheat the heater.

In the heating operation, the heater may be driven after entry of the heater into the travel path of the cast slab has been completed, to heat the cast slab.

In the heating operation, upper and lower surfaces of the cast slab may be heated simultaneously with each other.

In the heating operation, a plurality of induction coils provided in the heater may individually enter the travel path of the cast slab, to heat the cast slab.

According to another aspect of the present disclosure, a continuous casting rolling device includes a continuous casting device producing a cast slab; a rolling mill including a first rolling unit connected to the continuous casting device and a second rolling unit disposed on an exit side of the first rolling unit to be spaced apart therefrom, to reduction-roll the cast slab; a cutter provided in at least one of a position between the continuous casting device and the first rolling unit and a position between the first rolling unit and the second rolling unit, in such a manner that the cast slab travels in a continuous rolling mode in which the cast slab is continuously provided between the continuous casting device and the rolling mill and in a discontinuous rolling mode in which the cast slab is cut before the first rolling unit or the second rolling unit; and a heater entering the travel path of the cast slab after a front end portion of the cast slab enters the rolling mill in the continuous milling mode. The heater enters the travel path of the cast slab, immediately after an initial point of the cast slab, at which a height of the cast slab in a direction perpendicular to a direction of travel of the cast slab begins to be constant, passes through a position of the heater in the direction of travel of the cast slab.

The second rolling unit may include a plurality of rolling stands including upper and lower rolling rolls, a slab detection sensor sensing the front end portion of the cast slab may be provided on a rolling stand disposed on an exit side of a forward rolling stand into which the front end portion of the cast slab initially enters, among the plurality of rolling stands, and the heater may enter the travel path of the cast slab, immediately after the initial point of the cast slab, at which the height of the cast slab in the direction perpendicular to the direction of travel of the cast slab begins to be constant, is sensed by the slab detection sensor.

The second rolling unit may include a plurality of rolling stands including upper and lower rolling rolls, and a temperature detection sensor sensing a temperature of the cast slab may be provided on a forward rolling stand, into which the front end portion of the cast slab initially enters, among the plurality of rolling stands.

The heater may include a plurality of coil plates provided with an induction coil, connected to a power supply source, to heat the cast slab, and provided in a '⊏' or '=' form in such a manner that upper and lower surfaces of the cast slab face the coil plates; and a transfer unit connected to the plurality of coil plates to move the induction coil in a width direction of the cast slab.

### [Advantageous Effects]

A continuous casting rolling method according to exemplary embodiments in the present invention may provide an effect of preventing collision between a heater and a cast slab on a continuous casting rolling line. For example, positive attributes, in which collisions between a heater and a bent cast slab may be prevented, may be provided.

As a result, the halting of production on a continuous casting rolling line may be prevented, thereby providing stable production of products.

Further, the heater may be specified with respect to a point in time of entry of a heater onto a travel path of a cast slab, thereby providing an effect of improving an actual yield rate of products.

### [Description of Drawings]

FIGS. 1 and 2 are views illustrating a continuous casting rolling device according to the related art.
FIG. 3 is a side view of a continuous casting rolling device used in a method according to an exemplary embodiment in the present invention.
FIG. 4 is a plan view illustrating a heater in a continuous casting rolling device used in a method according to an exemplary embodiment in the present invention.
FIG. 5 is a state view illustrating operations of a heater in a continuous casting rolling device used in a method according to an exemplary embodiment in the present invention.
FIG. 6 is a flowchart illustrating a continuous casting rolling method according to an exemplary embodiment in the present invention.

### [Best Mode]

Hereinafter, exemplary embodiments of the present invention will be described in detail with reference to the accompanying drawings. The invention may, however, be exemplified in many different forms and should not be construed as being limited to the specific embodiments set forth herein, and those skilled in the art and understanding the present disclosure could easily propose other embodiments included in the scope of the invention by the addition, modification, and removal of components within the same scope as defined by the appended claims, but those are to be construed as being included in the scope of the invention.

In the following description, the same reference numerals are used to designate the same or similar components in the drawings according to respective exemplary embodiments.

A rolling method, a continuous casting rolling method, and a continuous casting rolling device (1) according to an exemplary embodiment in the present disclosure are provided to prevent damage in configurations provided in a layout, during continuous casting rolling.

For example, in the case of the continuous casting rolling, collision between a cast slab 2 and the heater 40 on a continuous casting rolling line may be prevented. In detail, positive attributes in that a collision between the heater 40 and the bent cast slab 2 may be prevented.

Thus, stopping of the continuous casting rolling line may be prevented to stably produce a product. Further, as a point in time in entry of the heater 40 onto a travel course of the cast slab 2 is specified, an actual yield rate of products may be improved.

First, the continuous casting rolling device 1 will be described in detail, and then a rolling method and a continuous casting rolling method will be described.

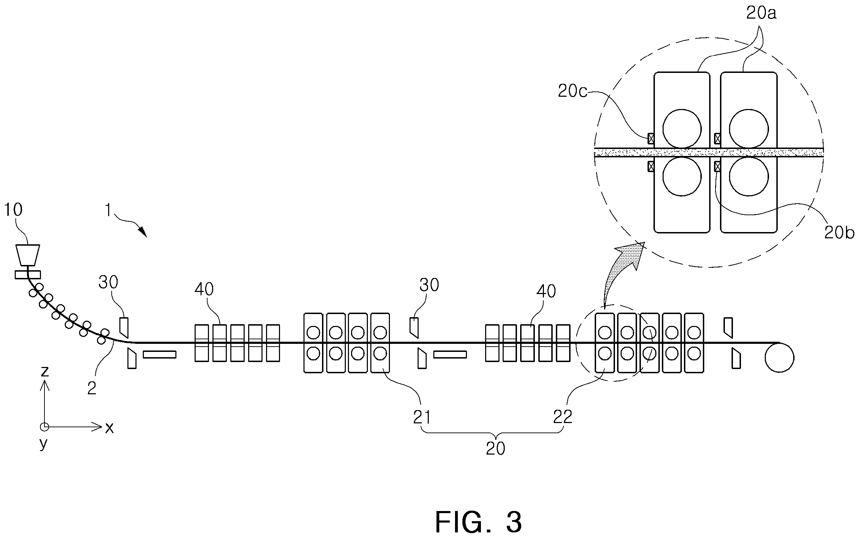

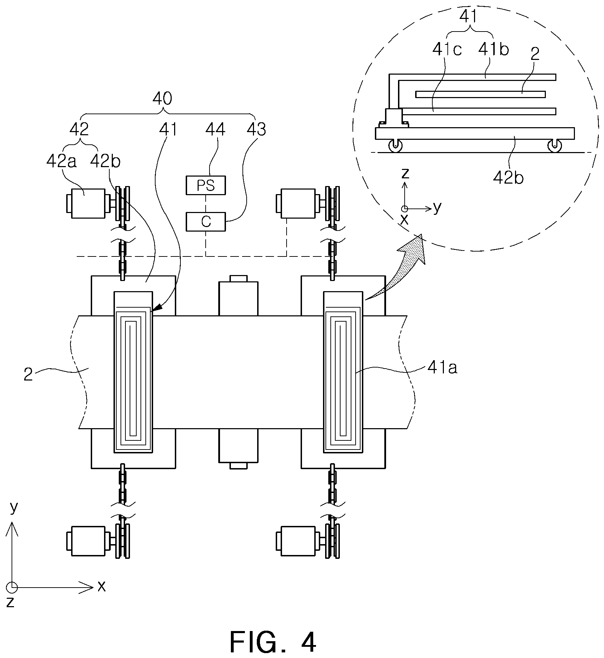

FIG. 3 is a side view illustrating the continuous casting rolling device 1 used in a method according to an exemplary embodiment, and FIG. 4 is a plan view illustrating the heater 40 in the continuous casting rolling device 1 according to an exemplary embodiment.

With reference to FIGS. 3 and 4, a continuous casting rolling device 1 used in a method according to another exemplary embodiment in the present disclosure may include a continuous casting device 10 producing a cast slab 2; a rolling mill 20 including a first rolling unit 21 connected to the continuous casting device 10 and a second rolling unit 22 disposed on an exit side of the first rolling unit 21 to be spaced apart therefrom, to roll the cast slab 2; a cutter 30 provided in at least one of a position between the continuous casting device 10 and the first rolling unit and a position between the first rolling unit 21 and the second rolling unit 22, in such a manner that the cast slab 2 may travel in a continuous rolling mode in which the cast slab 2 is continuously provided between the continuous casting device 10 and the rolling mill 20 and in a discontinuous rolling mode in which the cast slab 2 is cut before the first rolling unit 21 or the second rolling unit 22; and a heater 40 that enters the travel path of the cast slab 2 after a front end portion 2a of the cast slab enters the rolling mill 20 in the continuous milling mode. In this case, the heater 40 may enter a travel path of the cast slab 2, immediately after an initial point 2b of the cast slab, at which a height h of the cast slab 2 in a direction z perpendicular to a direction of travel x of the cast slab 2 begins to be constant, passes through a position of the heater 40 in which the heater is to be located, in the direction of travel x of the cast slab 2.

In addition, the second rolling unit 22 of the continuous casting rolling device 1 used in a method according to the exemplary embodiment may include a plurality of rolling stands 20a including upper and lower rolling rolls. A slab detection sensor 20b detecting the front end portion 2a of the cast slab may be provided on a rolling stand 20a provided on an exit side of a forward rolling stand 20a, among the plurality of rolling stands 20a. The heater 40 may enter the travel path of the cast slab 2, immediately after the initial point 2b of the cast slab, at which the height h of the cast slab 2 in a direction z perpendicular to the direction of travel x of the cast slab 2 begins to be constant, is sensed by the slab detection sensor 20b.

In addition, the second rolling unit 22 of the continuous casting rolling device 1 used in a method according to another exemplary embodiment in the present disclosure may include a plurality of rolling stands 20a including upper and lower rolling rolls. In this case, a temperature detection sensor 20c sensing temperature of the cast slab 2 may be provided on a forward rolling stand 20a, into which the front end portion 2a of the cast slab initially enters, among the plurality of rolling stands 20a.

Further, the heater 40 of the continuous casting rolling device 1 used in a method according to another exemplary embodiment in the present disclosure may include a plurality of coil plates 41 provided with an induction coil 41a connected to a power supply source 44 to heat the cast slab 2, and provided in a '⊏' or '=' form in such a manner that upper and lower surfaces of the cast slab 2 face the coil plates; and a transfer unit 42 connected to the coil plate 41 to move the induction coil 41a in a width direction y of the cast slab2.

For example, in order to prevent a collision between the front end portion 2a of the cast slab and the heater 40, the heater 40 specified with respect to a point in time of entering a path on which the cast slab 2 travels in a direction of travel x may be provided.

In detail, a collision between the heater and the cast slab 2 may be prevented simultaneously with improvements of an actual yield rate of products, in that after the initial point 2b of the cast slab, at which a height h of the cast slab 2 in a direction z perpendicular to the direction of travel x of the cast slab 2 begins to be constant, in the front end portion 2a of the cast slab 2, passes through a position of the heater 40 in which the heater is to be located, the heater 40 may enter a travel path of the cast slab 2 on which the cast slab 2 travels in the direction of travel x.

In this case, the continuous casting device 10 may serve to produce the cast slab 2 from molten steel using a casting process. For example, the continuous casting device 10 may supply molten steel from a tundish to a casting mold, and the supplied molten steel may be deprived of heat to form the cast slab 2, and the cast slab 2 may be guided and moved by a segment roll and a pinch roll to be supplied to the rolling mill 20 to be described later.

On the other hand, since the continuous casting device 10 produces the cast slab 2 depending on a solidification speed of the molten steel, there may be a speed limit in continuously receiving the cast slab 2 produced by the continuous casting device 10 and reduced by the rolling mill 20 to produce the cast slab 2.

On the other hand, for example, when the cast slab 2 is produced in such a manner that the cast slab 2 produced in the continuous casting device 10 is cut by the cutter 30 to be described later to be provided to the rolling mill 20 in a discontinuous manner, the rolling mill 20 may rapidly produce the cast slab 2 by performing a rolling operation independently of the production speed of the continuous casting device 10.

As described above, the process of producing the cast slab 2 produced in the continuous casting device 10 as the cast slab 2 using the rolling mill 20 may be classified as a continuous rolling mode or a discontinuous rolling mode. The rolling production modes as described above may be performed in combination, or respective modes may be performed independently.

However, in the case of the continuous rolling mode, since the rolling process with respect to the cast slab 2 produced in the continuous casting device 10 at a limited speed is performed in the rolling mill 20 to be described later, a configuration of the heater 40 to be described below, to supplement cooling of the cast slab 2, may also be required. In addition, in the case of the discontinuous rolling mode, when it is required to heat the cut cast-slab 2 to an extent of temperature at which the rolling may be carried out, the cast slab 2 may be required to be heated by the heater. 40.

In this case, when a warp or camber occurs in the front end portion 2a of the cast slab, an overall process maybe stopped due to collision with the heater 40.

In order to solve this problem, the heater 40 may move onto a travel path of the cast slab 2 at a specific point in time, which will be described later.

The rolling mill 20 may serve to receive the cast slab 2 produced in the continuous casting device 10 and reduction-press the cast slab and thus produce the cast slab 2. To this end, the rolling mill 20 may perform pressing for reduction with respect to the cast slab while allowing the cast slab 2 to pass between the rolling rolls of the rolling stand 20a including a pair of rolling rolls. As the rolling stand 20a, a plurality of rolling stands 20a may be provided.

Further, the rolling mill 20 may be classified as the first rolling unit 21 and the second rolling unit 22 depending on a position thereof.

In this case, the first rolling unit 21 may be a rolling mill 20 provided in connection with a rear end, an exit side, of the continuous casting device 10, and may produce the cast slab 2 in cooperation with the second rolling unit 22 in a continuous rolling mode.

For example, in the continuous rolling mode, since the rolling process is performed using the cast slab 2 connected to the continuous casting device 10, if a reduction process is suddenly performed on the cast slab, the continuous casting device 10 may be affected thereby. Thus, a primarily reduction-rolled cast slab 2 having a predetermined thickness may be produced by the first rolling unit 21, and then, the primarily reduction-rolled steel slab 2 may be secondarily rolled in finish rolling, thereby producing a rolled steel product.

On the other hand, the first rolling unit 21 is not limited to only being used in the continuous rolling mode, and may also produce the cast slab 2 in cooperation with the second rolling unit 22, even in the discontinuous rolling mode.

The first rolling unit 21 may receive the cast slab 2 produced in the continuous casting device 10, and may produce the primarily reduction-rolled cast slab 2. In this case, since the cast slab 2 produced and supplied by the continuous casting device 10 may have a nonuniform temperature distribution in a thickness direction of the cast slab 2, the quality of a produced cast slab 2 may be lowered. In order to solve this problem, the heater 40 may be provided in a method according to an exemplary embodiment in the present disclosure, and a description thereof will be provided below.

The second rolling unit 22 may receive the primarily reduction-rolled cast slab 2 produced by the first rolling unit 21, or may directly receive the cast slab 2 produced by the continuous casting device 10 to produce an ultimately, secondarily reduction-rolled cast slab 2.

The second rolling unit 22 described above may also reduction-press the cast slab 2 moved between the rolling rolls of the rolling stand 20a including a pair of rolling rolls, to thus produce the cast slab 2. The produced cast slab 2 may be wound on a rewinder and may then be ultimately discharged.

To this end, the second rolling unit 22 may be connected to the rear end, an exit side, of the first rolling unit 21, and the heater 40 to be described later, to heat the cast slab 2, may be provided between the second rolling unit 22 and the first rolling unit 21.

The heater 40 may serve to increase or maintain a temperature of the cast slab 2 produced and supplied from the continuous casting device 10 and may provide the cast slab to the rolling mill 20. To this end, the heater 40 may be disposed between an exit of the continuous casting device 10 and an entrance of the first rolling unit 21 or between an exit of the first rolling unit 21 and an entrance of the second rolling unit 22.

In this case, for example, when the cast slab 2 is heated only once, since heating time is relatively short, a surface of the cast slab 2 may be cooled while heat transferred to the surface of the cast slab 2 is transferred to a central portion of the cast slab 2. Thus, at the time at which the cast slab 2 is transferred to the rolling mill 20, the cast slab may have a nonuniform temperature distribution in a thickness direction of the cast slab 2, and since the rolling is performed on the cast slab 2 having a nonuniform temperature distribution, the heater 40 may include a plurality of coil plates 41 to heat the cast slab 2.

For example, in order to improve the temperature of the cast slab 2 in the thickness direction of the cast slab 2 as well as the central portion thereof while a temperature of an outer surface thereof is limited, the heater 40 may repeatedly perform heating by distributing a plurality of the induction coils 41 in the direction of travel x of the cast slab 2.

The heater 40 may further include a heat retaining unit to extend a temperature maintenance time of the cast slab 2 having a uniform temperature region formed by the heater 40. For example, the heat retaining unit may be provided to cover at least one surface of the cast slab 2 to maintain the temperature of the cast slab 2.

To this end, the heat retaining unit may enclose the entirety of a circumference of the cast slab 2 to efficiently maintain heat thereof. In order to increase a heat keeping rate, heat maintenance gas for heat maintenance may also be provided.

The heat retaining unit may be formed using refractory bricks formed of a ceramic-based material, or the like.

The heat retaining unit may also be provided as a holding furnace. For example, the heater 40 may be provided inside the heat retaining unit, a holding furnace.

In detail, the heater 40 may include a coil plate 41, a transfer unit 42, a controller 43, and the like.

The coil plate 41 may be configured to perform induction heating, the transfer unit 42 may be configured to set a position of the coil plate 41, and the controller 43 may be configured to adjust a degree of heating of the coil plate 41, a driving degree of the transfer unit 42, and the like.

In this case, the coil plate 41 may include the induction coil 41a for heating using induction electromotive force. For example, when the induction coil 41a is used for heating, a temperature to heat the cast slab 2 may be adjusted. Thus, a heating level may be set differently according to a position in which the heater 40 is provided, and the heating level may also be gradually increased.

However, when the induction coil 41a is used, a greater amount of magnetic flux may be present in an outer surface portion of the cast slab 2 adjacent to the induction coil 41a, than in a central portion of the cast slab 2, in the thickness direction, and thus, a relatively large amount of heat may be generated and may be heated more.

In order to adjust the amount of heating of the induction coil 41a, the induction coil 41a may be connected to the power supply source 44, and the controller 43 for controlling thereof may be provided.

The adjustment of the heating amount of the induction coil 41a as described above may include a function of turning the induction coil 41a on and off. For example, the turning on and off of the induction coil 41a may be controlled by controlling whether the power supply source 44 supplies power.

The coil plate 41 may be provided on both upper and lower surfaces of the cast slab 2, and may also have a '⊏' form for structural stability in such a manner that a side of the cast slab 2 may be inserted thereinto.

For example, the coil plate 41 may be composed of an upper coil plate 41b facing an upper surface of the cast slab 2, and a lower coil plate 41c facing a lower surface of the cast slab 2, and a connecting plate connecting the upper coil plate 41b and the lower coil plate 41c may be provided.

However, an exemplary embodiment in the present disclosure is not limited thereto, and the coil plate 41 may also be provided in a '=' form in a structure in which the upper and lower surfaces of the cast slab 2 are heated, or the like. In this case, the coil plate 41 may only be composed of the upper coil plate 41b and the lower coil plate 41c.

The transfer unit 42 may move the coil plate 41 including the induction coil 41a in a width direction y of the cast slab 2, in such a manner that the induction coil 41a may be moved onto a travel path of the cast slab 2 or released therefrom.

Thus, in order to heat the cast slab 2, the induction coil 41a may be configured to move to the upper surface or the lower surface of the cast slab 2. In this case, during non-heating, the heater 40 may be removed from the travel path of the cast slab 2, to prevent the occurrence of a problem such as a collision between the heater and the cast slab 2, or the like.

In this case, by the transfer unit 42, the coil plate 41 may enter the path on which the cast slab 2 travels, after the front end portion 2a of the cast slab has passed. In detail, in the front end portion 2a of the cast slab, the initial point 2b of the cast slab, at which the height h of the cast slab 2 in a direction z perpendicular to the direction of travel x of the cast slab 2 begins to be constant, passes, the coil plate may enter a travel path of the cast slab 2 to be located in the direction of travel x of the cast slab 2.

In addition, the controller 43 may perform controlling such that the induction coil 41 may move to the travel path of the cast slab 2 after the cast slab 2 is detected by the slab detection sensor 20b provided on the rolling mill 20.

For example, the first rolling unit 21 or the second rolling unit 22 may include a plurality of rolling stands 20a including upper and lower rolling rolls. The slab detection sensor 20b detecting the front end portion 2a of the cast slab may be provided on a rolling stand 20a provided on an exit side of a forward rolling stand 20a in which the front end portion 2a of the cast slab initially enters, among the plurality of rolling stands 20a.

In detail, in the case of a group of the plurality of rolling stands 20a constituting the first rolling unit 21 or the second rolling unit 22, the slab detection sensor 20b may be provided on a second rolling stand 20a. Since the detection of the cast slab 2 by the slab detection sensor 20b may indicate that the front end portion 2b of the cast slab 2 has passed a position of the heater 40, when the heater 40 enters the travel path of the cast slab 2, a collision between the heater and the cast slab 2 may be prevented.

In addition, the slab detection sensor 20b may be installed in a position corresponding to a height h2 of the cast slab 2 in normal operations, which is the height h2 of the cast slab 2 in a direction z perpendicular to the direction of travel x, to detect an initial point 2b of the cast slab, at which the height h of the cast slab 2 in the direction of travel x of the cast slab 2 begins to be constant.

In this case, the slab detection sensor 20b may be an infrared sensor directly detecting whether the cast slab 2 has passed or not, or the like, and may also be provided as a load cell installed in the rolling stand 20a, a sensor detecting a moment when a material is caught by the rolling mill using a hydraulic pressure conversion device, or the like.

Further, the controller 43 may be connected to the temperature detection sensor 20c provided on a forward rolling stand 20a provided as a first rolling stand 20a, among the plurality of rolling stands 20a constituting the first rolling unit 21 or the second rolling unit 22, to perform controlling, such that the coil plate 41 may enter the travel path of the cast slab 2 according to a sensed temperature.

For example, generally in the discontinuous rolling mode, since rapid rolling may be performed, the use of the heater 40 may not be required. However, in the case in which a relatively high temperature condition is required in an abnormal state or rolling of a high strength steel, since the cast slab 2 may be required to be heated, even in the case of the discontinuous rolling mode, the controller 43 may be connected to the temperature detection sensor 20c to determine the entry of the coil plate 41.

Thus, in addition to the positive attributes of preventing a collision between the cast slab 2 and the coil plate 41, as the coil plate 41 may be advanced into the travel path of the cast slab 2 at a point in time suitable therefor, the cast slab 2 may be prevented from being wasted.

To this end, the transfer unit 42 may include a movement plate 42b on which the coil plate 41 is provided, and a motor 42a driving the movement plate 42b.

The movement plate 42b may be connected to the motor 42a by a chain, and the chain may be moved by receiving driving force by a sprocket provided on the motor 42a. However, the driving force moving the movement plate 42b is not limited to that provided by the motor 42a, and the driving force may be obtained by a hydraulic or pneumatic cylinder.

Further, in order for the movement plate 42b to be provided on the travel path of the cast slab 2, a wheel may be coupled to a lower surface thereof.

On the other hand, a plurality of the movement plates 42b may be spaced apart from each other to support and move the respective coil plate 41. A movement roll supporting the cast slab 2 may be provided between the movement plates 42b spaced apart from each other.

The cutter 30 may serve to cut a portion of the cast slab 2, and may be connected to a drawer removing the cut slab 2. In this case, the cutter 30 may be disposed in at least one of a position between an exit of the continuous casting device 10 and an entrance of the first rolling unit 21 and a position between an exit of the first rolling unit 21 and the second rolling unit 22. For example, in the case in which the heater 40 is provided between the exit of the continuous casting device 10 and the entrance of the first rolling unit 21 and between the exit of the first rolling unit 21 and the second rolling unit 22, the cutter 30 may be disposed at the entrances of the heaters 40.

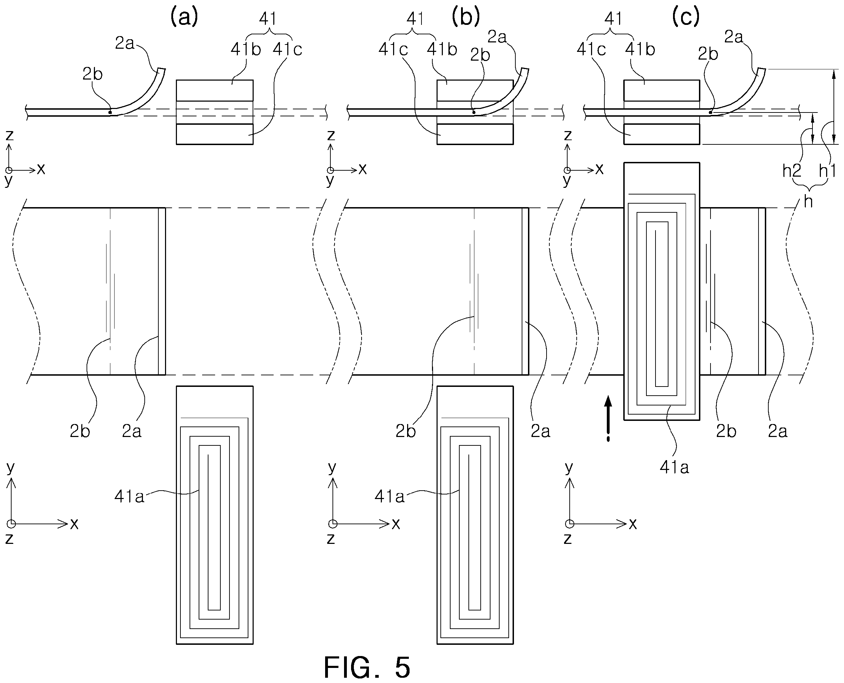

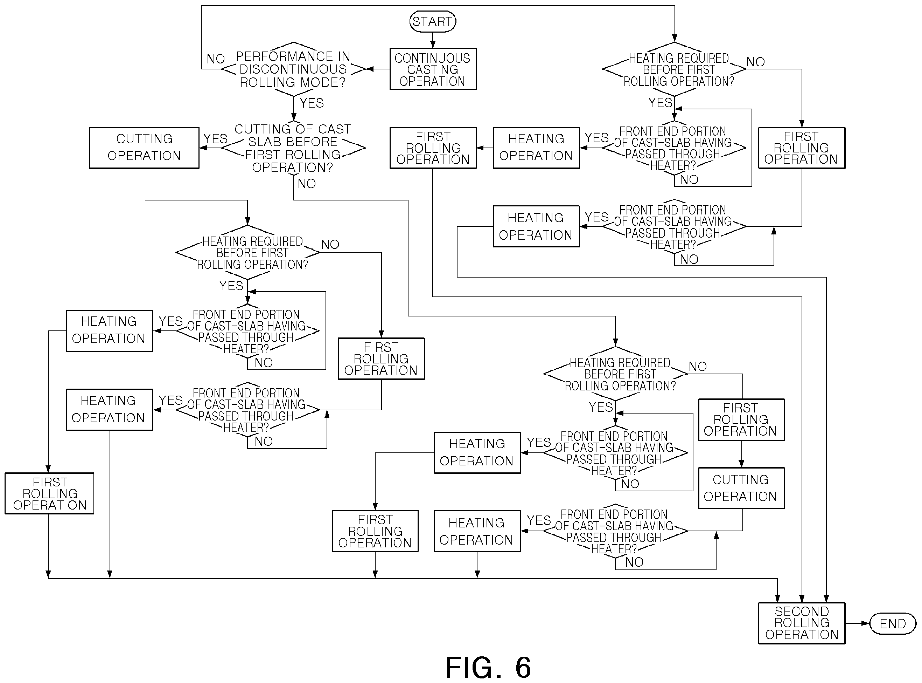

FIG. 5 is an operational state view illustrating the heater 40 in the continuous casting rolling device 1 used in a method according to an exemplary embodiment in the present disclosure, and FIG. 6 is a flowchart illustrating a continuous casting rolling method according to an exemplary embodiment in the present disclosure.

With reference to FIGS. 5 and 6, a method according to an exemplary embodiment in the present disclosure may include a rolling operation of reduction rolling a supplied cast slab 2, and a heating operation performed prior to or during the rolling operation, to heat the cast slab 2 by allowing a heater 40 to enter a travel path of the cast slab 2 on which the cast slab travels, immediately after a point 2b of the cast slab 2, with which a height h of the cast slab 2 uniformly converges, passes through a position of the heater 40 in which the cast slab 2 is to be located in a direction of travel x of the cast slab 2, the heater 40 being provided to increase or maintain temperature of the cast slab 2.

In addition, in the heating operation of the method according to the exemplary embodiment, when the height h of the cast slab 2 is changed within a range of a gap between an upper coil plate 41b and a lower coil plate 41c of the heater 40 heating upper and lower surfaces of the cast slab 2, it may be determined that the height h of the cast slab 2 is constantly converged.

Further, a continuous casting rolling method according to another exemplary embodiment in the present disclosure may include a continuous casting operation of producing a cast slab 2, a rolling operation of reduction-rolling the cast slab 2, and a heating operation performed prior to or during the rolling operation, to heat the cast slab 2 by allowing the heater 40 to enter a travel path of the cast slab 2 on which the cast slab travels, after a front end portion 2b of the cast slab 2 travels, in a continuous rolling mode in which the cast slab 2 is provided as a continuous body in the continuous casting operation and the rolling operation, the heater 40 being provided to increase or maintain temperature of the cast slab 2. In the heating operation, immediately after an initial point 2b of the cast slab, at which a height h of the cast slab 2 in a direction z perpendicular to the direction of travel x of the cast slab 2 begins to be constant, passes through a position of the heater 40 in a direction of travel x of the cast slab 2 in which the cast slab travels, the heater 40 may enter the travel path of the cast slab 2.

For example, in order to prevent a collision between the heater 40 to heat the cast slab 2 and the front end portion 2a of the cast slab 2, the heater 40, specified with respect to a point in time at which the heater enters a travel path of the cast slab 2 on which the cast slab travels in a direction of travel x, may be provided.

In detail, a collision between the heater and the cast slab 2 may be prevented simultaneously with improvements of an actual yield rate of products, by including an operation in which, after an initial point 2b of the cast slab, at which a height h of the cast slab 2 in a direction z perpendicular to the direction of travel x of the cast slab 2 begins to be constant, in the front end portion 2a of the cast slab, passes through a position of the heater, the heater 40 may enter a travel path of the cast slab 2 on which the cast slab travels in the direction of travel x.

In this case, the initial point 2b of the cast slab, at which the height h of the cast slab 2 in the direction z perpendicular to the direction of travel x of the cast slab 2 begins to be constant, may be a portion in which a vertical warp or a horizontal camber occurring in the front end portion 2a of the cast slab ends.

The continuous casting operation may be an operation of producing the cast slab 2, in which molten steel is solidified in a casting mold to be formed into the cast slab 2 and discharged therefrom. To this end, the molten steel may be supplied to the casting mold from a tundish of the continuous casting device 10, and the supplied molten steel may be stripped of heat to form the cast slab 2. The cast slab 2 may be guided by a segment roll and a pinch roll, and then, may be transferred to a subsequent operation.

The rolling operation may be an operation of reduction-rolling the cast slab 2 to produce a steel plate product. For example, in the rolling operation, the cast slab 2 produced in the continuous casting operation may be received and reduction-rolled to produce a steel plate product. Alternatively, the cast slab 2 produced separately from the continuous casting operation may be received to produce a steel plate product.

In this case, the rolling operation may include a plurality of operations, for example, a first rolling operation and a second rolling operation. In the first rolling operation, a primarily reduction-rolled cast slab 2, produced from the first supplied cast slab 2, to have a thickness greater than that of an ultimately produced product, while having the thickness less than that of the first supplied cast slab 2, may be formed. In the second rolling operation, the cast slab 2 primarily reduction-rolled in the first rolling operation may be secondarily reduction-rolled to have a thickness of an ultimate product.

In detail, the rolling mill 20 may be performed by the rolling mill 20 including a plurality of rolling stands 20a containing a pair of upper and lower rolling rolls. A heating operation to be described below may be performed when the front end portion 2a of the cast slab enters a forward rolling stand 20a, into which the front end portion 2a of the cast slab initially enters, among the plurality of rolling stands 20a.

To this end, the rolling mill 20 performing the rolling operation may be provided with a slab detection sensor 20b, a temperature detection sensor 20c, and the like disposed thereon.

The heating operation may be an operation of heating the cast slab 2 in the case in which a temperature of the cast slab 2 does not reach a temperature at which the rolling operation may be carried out.

In this case, the heating operation may be carried out before the rolling operation or during the rolling operation. In detail, the heating operation may be performed before the first rolling operation or between the first rolling operation and the second rolling operation, in the rolling operation.

In detail, the heating operation may be performed on a portion of the cast slab 2 provided after advancement of the front end portion 2a of the cast slab, which is to prevent a collision between the heater 40 heating the cast slab 2 and the cast slab 2.

For example, in the case of the cast slab 2, the vertical warp or the horizontal camber may generally occur in the front end portion (2a) thereof after the continuous casting operation or the first rolling operation. Thus, the heating operation may be performed to heat the cast slab 2 while preventing a collision between the heater 40 and the front end portion 2a of the cast slab in which warp has occurred.

Since warping of the front end portion 2b of the cast slab 2 generally occurs due to residual stress of the cast slab 2 due to pressing in the first rolling operation, the heating operation specified with respect to a point in time at which the heater 40 enters may be carried out between the first rolling operation and the second rolling operation.

For example, the rolling operation in a continuous casting rolling method according to another exemplary embodiment in the present disclosure may include a first rolling operation of primarily reduction-rolling the cast slab 2 after the continuous casting operation, and a second rolling operation of secondarily reduction-pressing the primarily rolled cast slab 2 after the first rolling operation. Thus, the heating operation may be performed between the first rolling operation and the second rolling operation.

The heating operation may be performed in a continuous rolling mode in which the cast slab 2 is provided as a continuous body in the continuous casting operation and the rolling operation and in a discontinuous rolling mode in which the cast slab 2 is cut before or during the rolling operation.

In detail, the heating operation may not be performed in the discontinuous rolling mode, but may only be performed in the continuous rolling mode, since the cast slab 2 rapidly passes through the rolling operation to be produced as a product in the discontinuous rolling mode such that there is little occurrence of a cooling problem of the cast slab 2.

For example, the continuous casting rolling method according to the exemplary embodiment may further include a cutting operation of performing selective cutting of the cast slab 2, from cutting before the rolling operation and cutting during the rolling operation, to switch between the continuous rolling mode, and the discontinuous rolling mode in which the cast slab 2 is cut before or during the rolling operation. In this case, the heating operation may be carried out in the continuous rolling mode.

However, performing the heating operation is not necessarily included in the discontinuous rolling mode. For example, even in the discontinuous rolling mode, a level of temperature of the cast slab 2 may be insufficient to perform the rolling operation thereon. In this case, the heating operation may be performed.

In detail, in the case of the heating operation of the continuous casting rolling method according to the exemplary embodiment, for example, when a temperature of the cast slab 2 cut to perform the discontinuous rolling mode in the cutting operation is lower than a temperature of the cast slab 2 heated in the continuous rolling mode, the heating operation may be performed in the discontinuous rolling mode.

To this end, the temperature detection sensor 20c described above may be provided on a forward rolling stand 20a, into which the front end portion 2a of the cast slab initially enters, among the plurality of rolling stands 20a of the rolling mill 20, to sense temperature of the cast slab 2. In this case, in the case in which the cast slab 2 travels at a temperature lower than a required temperature, the heater 40 may enter the travel path of the cast slab 2 to heat the cast slab 2.

In detail, in this case, the heater 40 enters an upper portion of the cast slab 2 after the front end portion 2a of the cast slab enters the rolling stand 20a. Thus, after the initial point 2b of the cast slab, at which the height h of the cast slab 2 in a direction z perpendicular to the direction of travel x of the cast slab 2 begins to be constant, passes through a position of the heater, the heater 40 may be provided on the cast slab 2, such that wastage of the cast slab 2 may be significantly reduced while preventing a collision between the heater 40 and the cast slab 2.

In other words, even when the front end portion 2a of the cast slab 2 is warped, a height h2 of the portions of the cast slab after the bent front end portion 2a thereof may be constantly converged, and may not have a collision with the heater 40. Thus, the heater 40 may enter the travel path of the cast slab 2 after the height h, h of the cast slab 2 has converged.

For example, portions of the cast slab 2 after the point 2b thereof, in which a height (h)(h2) after a highest height (h) (h1) of the bent front end portion 2a of the cast slab 2 becomes constant, have no risk of collision with the heater 40, and thus, the heater 40 may enter the travel path of the cast slab 2 after the point 2b has passed, thereby improving an actual yield rate.

In this case, the height h of the cast slab 2 may be determined according to any criterion as long as it is a height according to a criterion determinable on the same basis in all of portions of the cast slab 2. The criterion illustrated in FIG. 5 is set based on a lower surface of the lower coil plate 41c.

In addition, in order to determine whether the height h of the cast slab 2 is constantly converged or not, it may be determined that when the height h of the cast slab 2 is changed within an interval between the upper coil plate 41b and the lower coil plate 41c of the heater 40, the height is converged.

The convergence criterion as described above is provided based on a range in which the cast slab 2 may be inserted between the upper coil plate 41b and the lower coil plate 41c without collision.

Further, a point in time at which the heater 40 enters the travel path of the cast slab 2 in the heating operation may be determined, based on whether the front end portion 2a of the cast slab enters the rolling stand 20a.

For example, the rolling operation of the continuous casting rolling method according to the exemplary embodiment may be performed by the rolling mill 20 including a plurality of rolling stands 20a containing upper and lower rolling rolls. Further, in the heating operation, immediately after the front end portion 2a of the cast slab 2 passes through an exit of the forward rolling stand 20a in which the front end portion 2a of the cast slab initially enters, among the rolling stands 20a provided behind the heater 40 in the direction of travel x of the cast slab 2, the heater 40 may enter a travel path of the cast slab 2.

In detail, when the heating operation is performed before the first rolling operation, immediately after the front end portion 2a of the cast slab enters a first rolling stand 20a provided in a foremost position in a group of the rolling stands 20a included in the first rolling unit 21, and is then discharged through an exit thereof, the heater 40 may enter above the cast slab 2.

The discharge of the front end portion 2a of the cast slab through the exit of the first rolling stand 20a as described above may be detected by the fore-described slab detection sensor 20b.

A driving point in time of the heater 40 may also be specified, in which exemplary embodiments may be varied depending on rapid heating of the cast slab 2 and uniform heating of the cast slab 2.

For example, in order to rapidly raise the temperature of the cast slab 2, the heating operation of the continuous casting rolling method according to the exemplary embodiment may be performed to drive the heater 40 before the heater 40 enters above the travel path of the cast slab 2, to preheat the heater 40.

In this case, since the heater 40 is preheated before entering above the cast slab 2, the cast slab 2 may be heated while the heater starts to enter above the cast slab 2.

In other words, the cast slab 2 starts to be heated from one side of the cast slab 2 into which the heater 40 enters, and thus, the cast slab 2 may be rapidly heated.

On the other hand, in order to raise the temperature of the cast slab 2 uniformly, after the entry of the heater 40 into the travel path of the cast slab 2 has been completed, the heating operation of the continuous casting rolling method according to the exemplary embodiment may be performed to drive the heater 40 and heat the cast strip 2.

Further, the heating operation of the continuous casting rolling method according to another exemplary embodiment may be performed to heat upper and lower surfaces of the cast slab 2 simultaneously.

In detail, as the heater 40 may start to be driven and heated after the heater 40 has completely entered the travel path of the cast slab 2, heating may be started at the same point in time in a width direction y of the cast slab 2, and thus, the cast slab 2 having a uniform temperature distribution may be provided.

In addition, by simultaneously heating the upper and lower surfaces of the cast slab 2, uniform heating of the cast slab 2 in a thickness direction z may also be performed.

In addition, in the heating operation, as heating is performed by a plurality of heaters 40 in such a manner that a temperature of heating the cast slab 2 may be set differently according to a position of the cast slab 2 on which the cast slab travels in the direction of travel x, the cast slab 2 may have a uniform temperature in the thickness direction of the cast slab.

For example, in the heating operation of the continuous casting rolling method according to another exemplary embodiment, a plurality of coil plates 41 provided in the heater 40 may individually enter the travel path of the cast slab 2, to heat the cast slab 2.

As described above, by heating the cast slab 2 with the plurality of coil plates 41 having different positions on the travel path of the cast slab 2 in the heating operation, a uniform temperature distribution of the cast slab 2 in the thickness direction may be formed, which is described above.

## Claims

1. A continuous casting rolling method, comprising:
a continuous casting operation of producing a cast slab (2) ;
a rolling operation of reduction-rolling the cast slab (2); and
a heating operation performed prior to or during the rolling operation, to heat the cast slab (2) by allowing a heater (40) to enter a travel path of the cast slab (2), after a front end portion of the cast slab (2) travels, in a continuous rolling mode in which the cast slab (2) is provided as a continuous body in the continuous casting operation and the rolling operation, the heater (40) being provided to increase or maintain a temperature of the cast slab (2),
**characterised in that** in the heating operation, immediately after an initial point of the cast slab (2), at which a height of the cast slab (2) in a direction perpendicular to a direction of travel of the cast slab (2) begins to be constant, passes through a position of the heater (40) in the direction of travel of the cast slab (2), the heater (40) enters the travel path of the cast slab (2).

2. The continuous casting rolling method of claim 1, further comprising a cutting operation of performing selective cutting of the cast slab (2), from cutting before the rolling operation or cutting during the rolling operation, to switch between the continuous rolling mode, and a discontinuous rolling mode in which the cast slab (2) is cut before or during the rolling operation,
wherein the heating operation is performed in the continuous rolling mode.

3. The continuous casting rolling method of claim 2, wherein when a temperature of the cast slab (2) cut to perform the discontinuous rolling mode in the cutting operation is lower than a temperature of the cast slab heated in the continuous rolling mode, the heating operation is performed in the discontinuous rolling mode.

4. The continuous casting rolling method of claim 1, wherein the rolling operation is performed by a rolling mill (20) including a plurality of rolling stands (20a) containing upper and lower rolling rolls, and
in the heating operation, the heater (40) enters the travel path of the cast slab (2), immediately after a front end portion of the cast slab (2) passes through an exit of a forward rolling stand (20a) into which the front end portion of the cast slab (2) initially enters, among rolling stands provided behind the heater in the direction of travel of the cast slab (2).

5. The continuous casting rolling method of claim 1, wherein the rolling operation comprises a first rolling operation of primarily reduction-rolling the cast slab (2) after the continuous casting operation, and a second rolling operation of secondarily reduction-pressing the primarily rolled cast slab (2) after the first rolling operation,
wherein the heating operation is performed between the first rolling operation and the second rolling operation.

6. The continuous casting rolling method of claim 1, wherein in the heating operation, the heater (40) is driven before the heater (40) enters above the travel path of the cast slab (2), to preheat the heater (40).

7. The continuous casting rolling method of claim 1, wherein in the heating operation, the heater (40) is driven after entry of the heater (40) into the travel path of the cast slab (2) has been completed, to heat the cast slab (2).

8. The continuous casting rolling method of claim 7, wherein in the heating operation, upper and lower surfaces of the cast slab (2) are heated simultaneously with each other.

9. The continuous casting rolling method of claim 1, wherein in the heating operation, a plurality of induction coils (41a) provided in the heater individually enter the travel path of the cast slab (2), to heat the cast slab (2).

## Patentansprüche

1. Stranggießwalzverfahren, Folgendes umfassend:
einen Stranggießvorgang zum Herstellen einer gegossenen Bramme (2);
einen Walzvorgang zum Reduktionswalzen der gegossenen Bramme (2); und
einen Erwärmungsvorgang, der vor dem oder während des Walzvorgangs erfolgt, um die gegossene Bramme (2) zu erwärmen, indem ermöglicht wird, dass eine Erwärmungsvorrichtung (40) in einen Verfahrweg der gegossenen Bramme (2) eintritt, nachdem sich ein vorderer Endabschnitt der gegossenen Bramme (2) bewegt, in einem Strangwalzmodus, bei dem die gegossene Bramme (2) als Stranggusskörper im Stranggießvorgang und Walzvorgang bereitgestellt wird, wobei die Erwärmungsvorrichtung (40) dazu vorgesehen ist, eine Temperatur der gegossenen Bramme (2) zu erhöhen oder aufrechtzuerhalten,
**dadurch gekennzeichnet, dass**
im Erwärmungsvorgang, unmittelbar, nachdem ein Ausgangspunkt der gegossenen Bramme (2), bei dem eine Höhe der gegossenen Bramme (2) in einer Richtung senkrecht zu einer Verfahrrichtung der gegossenen Bramme (2) konstant zu werden beginnt, eine Position der Erwärmungsvorrichtung (40) in der Verfahrrichtung der gegossenen Bramme (2) durchläuft, die Erwärmungsvorrichtung (40) in den Verfahrweg der gegossenen Bramme (2) eintritt.

2. Stranggießwalzverfahren nach Anspruch 1, darüber hinaus einen Schneidevorgang zum Durchführen eines selektiven Schneidens der gegossenen Bramme (2) ausgehend von einem Schneiden vor dem Walzvorgang oder einem Schneiden während des Walzvorgangs umfassend, um zwischen dem kontinuierlichen Walzmodus und einem diskontinuierlichen Walzmodus zu wechseln, bei dem die gegossene Bramme (2) vor oder während des Walzvorgangs geschnitten wird,
wobei der Erwärmungsvorgang im kontinuierlichen Walzmodus erfolgt.

3. Stranggießwalzverfahren nach Anspruch 2, wobei, wenn eine Temperatur der gegossenen Bramme (2), die geschnitten wird, um den diskontinuierlichen Walzmodus im Schneidvorgang durchzuführen, niedriger ist als eine Temperatur der im kontinuierlichen Walzmodus erwärmten gegossenen Bramme, der Erwärmungsvorgang im diskontinuierlichen Walzmodus erfolgt.

4. Stranggießwalzverfahren nach Anspruch 1, wobei der Walzvorgang durch ein Walzwerk (20) erfolgt, das mehrere Walzgerüste (20a) beinhaltet, die obere und untere Walzen enthalten, und
im Erwärmungsvorgang die Erwärmungsvorrichtung (40) in den Verfahrweg der gegossenen Bramme (2) eintritt, unmittelbar nachdem ein vorderer Endabschnitt der gegossenen Bramme (2) durch einen Ausgang eines Vorwärtswalzgerüsts (20a), in den der vordere Endabschnitt der gegossenen Bramme (2) anfänglich eintritt, von Walzgerüsten hindurchtritt, die hinter der Erwärmungsvorrichtung in der Verfahrrichtung der gegossenen Bramme (2) vorgesehen sind.

5. Stranggießwalzverfahren nach Anspruch 1, wobei der Walzvorgang einen ersten Walzvorgang einen ersten Walzvorgang eines primären Reduktionswalzens der gegossenen Bramme (2) nach dem Stranggießvorgang und einen zweiten Walzvorgang eines sekundären Reduktionspressens der primär gegossenen Bramme (2) nach dem ersten Walzvorgang umfasst,
wobei der Erwärmungsvorgang zwischen dem ersten Walzvorgang und dem zweiten Walzvorgang erfolgt.

6. Stranggießwalzverfahren nach Anspruch 1, wobei im Erwärmungsvorgang die Erwärmungsvorrichtung (40) angetrieben wird, bevor die Erwärmungsvorrichtung (40) oberhalb des Verfahrwegs der gegossenen Bramme (2) eintritt, um die Erwärmungsvorrichtung (40) vorzuwärmen.

7. Stranggießwalzverfahren nach Anspruch 1, wobei im Erwärmungsvorgang die Erwärmungsvorrichtung (40), nachdem der Eintritt der Erwärmungsvorrichtung (40) in den Verfahrweg der gegossenen Bramme (2) abgeschlossen wurde, angetrieben wird, um die gegossene Bramme (2) zu erwärmen.

8. Stranggießwalzverfahren nach Anspruch 7, wobei im Erwärmungsvorgang Unter- und Oberseiten der gegossenen Bramme (2) gleichzeitig miteinander erwärmt werden.

9. Stranggießwalzverfahren nach Anspruch 1, wobei im Erwärmungsvorgang mehrere in der Erwärmungsvorrichtung vorgesehene Induktionsspulen (41a) einzeln in den Verfahrweg der gegossenen Bramme (2) eintreten, um die gegossene Bramme (2) zu erwärmen.

## Revendications

1. Procédé de coulée continue laminage, comprenant :
une opération de coulée continue consistant à produire une brame coulée (2) ;
une opération de laminage consistant à laminer par réduction la brame coulée (2) ; et
une opération de chauffage effectuée avant ou pendant l'opération de laminage, pour chauffer la brame coulée (2) en permettant à un dispositif de chauffage (40) d'entrer dans un chemin de déplacement de la brame coulée (2), après qu'une partie d'extrémité avant de la brame coulée (2) se déplace, dans un mode de laminage continu dans lequel la brame coulée (2) est fournie comme corps continu lors de l'opération de coulée continue et l'opération de laminage, le dispositif de chauffage (40) étant prévu pour augmenter ou maintenir une température de la brame coulée (2),
**caractérisé en ce que**, lors de l'opération de chauffage, immédiatement après qu'un point initial de la brame coulée (2), auquel une hauteur de la brame coulée (2) dans une direction perpendiculaire à une direction de déplacement de la brame coulée (2) commence à être constante, passe par une position du dispositif de chauffage (40) dans la direction de déplacement de la brame coulée (2), le dispositif de chauffage (40) entre dans le chemin de déplacement de la brame coulée (2).

2. Le procédé de coulée continue laminage de la revendication 1, comprenant en outre une opération de coupe consistant à effectuer une coupe sélective de la brame coulée (2), à partir de la coupe avant l'opération de laminage ou la coupe pendant l'opération de laminage, pour commuter entre le mode de laminage continu, et un mode de laminage discontinu dans lequel la brame coulée (2) est coupée avant ou pendant l'opération de laminage,
sachant que l'opération de chauffage est effectuée dans le mode de laminage continu.

3. Le procédé de coulée continue laminage de la revendication 2, sachant que lorsqu'une température de la brame coulée (2) coupée pour effectuer le mode de laminage discontinu lors de l'opération de coupe est inférieure à une température de la brame coulée chauffée dans le mode de laminage continu, l'opération de chauffage est effectuée dans le mode de laminage discontinu.

4. Le procédé de coulée continue laminage de la revendication 1, sachant que l'opération de laminage est effectuée par un laminoir (20) incluant une pluralité de cages de laminage (20a) contenant des rouleaux de laminage supérieurs et inférieurs, et
lors de l'opération de chauffage, le dispositif de chauffage (40) entre dans le chemin de déplacement de la brame coulée (2), immédiatement après qu'une partie d'extrémité avant de la brame coulée (2) passe par une sortie d'une cage de laminage (20a) avant dans laquelle la partie d'extrémité avant de la brame coulée (2) entre initialement, parmi des cages de laminage prévues derrière le dispositif de chauffage dans la direction de déplacement de la brame coulée (2).

5. Le procédé de coulée continue laminage de la revendication 1, sachant que l'opération de laminage comprend une première opération de laminage consistant à laminer par réduction primaire la brame coulée (2) après l'opération de coulée continue, et une deuxième opération de laminage consistant à comprimer par réduction secondaire la brame coulée (2) laminée par réduction primaire après la première opération de laminage,
sachant que l'opération de chauffage est effectuée entre la première opération de laminage et la deuxième opération de laminage.

6. Le procédé de coulée continue laminage de la revendication 1, sachant que lors de l'opération de chauffage, le dispositif de chauffage (40) est entraîné avant que le dispositif de chauffage (40) entre au-dessus du chemin de déplacement de la brame coulée (2), pour préchauffer le dispositif de chauffage (40).

7. Le procédé de coulée continue laminage de la revendication 1, sachant que lors de l'opération de chauffage, le dispositif de chauffage (40) est entraîné après que l'entrée du dispositif de chauffage (40) dans le chemin de déplacement de la brame coulée (2) a été accomplie, pour chauffer la brame coulée (2).

8. Le procédé de coulée continue laminage de la revendication 7, sachant que lors de l'opération de chauffage, des surfaces supérieure et inférieure de la brame coulée (2) sont chauffées simultanément l'une à l'autre.

9. Le procédé de coulée continue laminage de la revendication 1, sachant que lors de l'opération de chauffage, une pluralité de bobines d'induction (41a) prévues dans le dispositif de chauffage entrent individuellement dans le chemin de déplacement de la brame coulée (2), pour chauffer la brame coulée (2).
